# EUROPEAN PATENT SPECIFICATION

(11) **EP 1 497 952 B1**
(45) Date of publication and mention of the grant of the patent: **25.11.2009**
(21) Application number: 03719810.8
(22) Date of filing: 17.04.2003
(51) Int. Cl.: H04L 12/28, H04N 17/04

(54) **TROUBLE SHOOTING AND UPDATING ELECTRONIC APPARATUS**
FEHLERBESEITIGUNG UND AKTUALISIERUNG VON ELEKTRONISCHEN GERÄTEN
DEPANNAGE ET MISE A JOUR D'APPAREIL ELECTRONIQUE

(30) Priority: 22.04.2002 US 374569 P
(43) Date of publication of application: 19.01.2005
(73) Proprietor: Thomson Licensing, 92100 Boulogne-Billancourt (FR)
(72) Inventor: GOEDDE, Kirby, Ryan, Morristown, IN 46161 (US); BURNETT, Anglea, Renee, Indianapolis, IN 46268 (US); GRIMES, Kevin, Lloyd, Fischers, IN 46038 (US); DINWIDDIE, Aaron, Hal, Cicero, IN 46034 (US); BEGALA, Michael, Patrick, Carmel, IN 46033 (US)
(74) Representative: Habasque, Etienne J. Jean-François
(86) International application number: PCT/US2003/011889
(87) International publication number: WO 2003/090410

(56) References cited:
- EP-A- 0 823 803
- WO-A-97/18636
- WO-A-99/09780
- US-A- 5 649 094
- US-A1- 2001 037 510

## Description

### Cross-Reference to Related Applications

Benefit of Provisional Patent Application 60/374,569, filed April 22, 2002, is claimed.

### Technical Field of Invention

This invention relates to the field of diagnosing, troubleshooting, aligning, and updating electronic appliances. More particularly the invention relates to systems and methods for servicing television apparatus that are controlled by microprocessors.

### Background Art

Electronic appliances controlled by microprocessors such as, for example, modem televisions, can be diagnosed by various methods known In the art. Troubleshooting, alignments, EEPROM manipulation, fault code reporting, and other checks are generally performed by opening the back cover of the appliance and using a computer to communicate with the microprocessors and other chassis components through a serial or parallel interface.

The prior art diagnostic systems consist of an interface box which plugs into the computer's parallel port and a serial cable that plugs into the IIC service connector located on the television chassis behind the back cover.

However, until now the removal of the back cover of the appliance being diagnosed was necessary, even though such appliances can often be repaired with diagnostic software alone, i.e., without having to physically touch the hardware on the chassis. Removal of the back cover of the appliance is not only time consuming to the person diagnosing the appliance, but it is also dangerous and presents some risk to the appliance.

Another problem with prior diagnostic procedures was that different models of chassis have different numbers of IIC busses, which the diagnostic software and system must communicate with. The service connector on the chassis is different for each chassis, with different numbers of pins, which required a new adapter board for each type of chassis being diagnosed. Such adapter boards are expensive and can be very confusing to a service person.

WO 97/18636 describes the control of remote devices achieved by having httpd (Web server) on a dedicated firmware device which takes commands from a remote http client (Web client). The firmware sends interface information to the target device with electronic, electromagnetic, or infrared signals to control the target device.

### Disclosure of Invention

It is therefore an object of the present invention to obviate the need for removal of the back cover or otherwise open electronic appliances in order to service the appliances.

It is another object of the invention to avoid the need for an interface box to be plugged into an IIC service connector on the chassis of an electronic appliance being repaired.

With the above mentioned goal in mind, the invention is an electronic apparatus according to claim 1 and a method of diagnosing and/or aligning the electronic apparatus according to claim 19.

Other features of the invention are found in the dependent claims.

These objects, and others which will become apparent from the following description, are achieved by the present invention which comprises in one aspect an electronic appliance having a network interface for connecting the apparatus to a network; means for assigning a network address to the apparatus for use by the apparatus to initiate communication with a server connected to the network when the apparatus is in a service mode; and means for executing commands from the server and reporting status to the server.

The electronic apparatus can be a television, satellite receiver, DVD player, VCR, or any other type of electronic appliance which has microcontrollers and other chassis components which can be diagnosed, aligned, and updated with diagnostic software running on a computer; wherein the commands are selected from the group consisting of maintenance commands, diagnostic commands, software update commands, and alignment commands. It is especially advantageous if the apparatus has a readily accessible Ethernet interface to which the test device can be connected without removal of the back cover or otherwise opening the apparatus.

In another aspect, the invention comprises a method of servicing an electronic apparatus comprising providing an Ethernet interface for connecting the apparatus to an Ethernet network; placing the apparatus in a service mode, assigning an IP address to the apparatus for communication with the TCP/IP server; initiating a connection request from the apparatus for connecting to a TCP/IP server through the Ethernet interface; executing commands from the TCP/IP server and reporting status to the TCP/IP server.

The appliance having the Ethernet interface and means to assign an IP address does not have to be opened for service according to the present invention. The appliance may be connected through the Ethernet interface to a diagnostic computer, either local or remotely over the Internet, and therefore the back cover or any other enclosure over the chassis does not have to be removed for diagnosing, servicing, troubleshooting, aligning, debugging, or performing software upgrades to electronic appliances. The Ethernet port can be adapted to perform the functions previously required by the serial or parallel interface inside behind the back cover.

As mentioned, the present invention allows a remote expert to perform diagnostics on appliances over an Internet connection through the Ethernet port on the appliance. The expert can be in any other location in the world, and does not have to be near the appliance being serviced, as was the case with prior diagnostic systems for appliances.

The invention is especially applicable to television apparatus, a form of electronic appliance, which is particularly difficult to service, diagnose, align, and troubleshoot, formerly requiring adapter boards.

### Brief Description of Drawings

**FIG. 1** is a process flow diagram of an embodiment of a setup procedure according to the invention.
**FIG. 2** is a continuation of the flow diagram of FIG. 1.
**FIG. 3** is an embodiment of a block diagram of a television apparatus with integrated browser with Internet connection and Ethernet connection to a diagnostic test device, according to the invention.

### Modes for Carrying Out the Invention

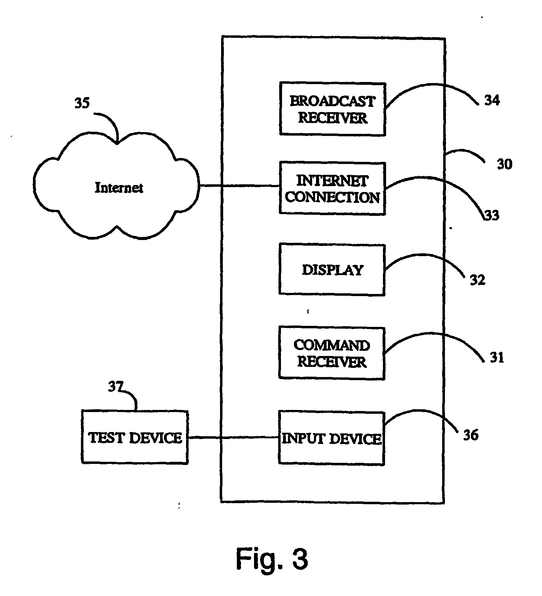

Referring first to **FIG. 3****,** an embodiment of a block diagram of a television apparatus **30** connected to the Internet **35** and connected to a test device **37** through an input device **36** such as an Ethernet connection having an Ethernet port according to the invention is illustrated. The television apparatus **30** has a broadcast (television signal) receiver **34** and display **32,** as are conventional for all televisions. The television signals may be supplied from a source such as an antenna or a cable system. The television apparatus **30** also has an Internet connection **33,** which includes browser software so that a browser can be displayed on the display **32,** as is conventional with most current computers, and is available in some recent models of television. The Internet connection 33 includes, for example, a modem (not shown) for connecting to an Internet service provider, e.g., via a telephone line, via a cable television line, or via a satellite transmitter. A command receiver **31** is included. The command receiver 31 receives commands from a service person entering commands by using a user interface device (not shown) such as a remote control or a front panel with keys in the television apparatus. The command receiver 31 also receives commands from the test device 37 through the input device 36. The television apparatus normally operates in two modes: a normal mode for normal television viewing and Internet browsing, and a service mode television servicing. The command receiver 31 places the television apparatus 30 into the service mode when requested through a user command. The command receiver 31 also executes other commands received and returns responses as necessary.

The command receiver 31 automatically assigns a default IP address for use by the television apparatus 30 to establish a service session by initiating a connection with the test device 37 through the input device 36. As such, the test device 37 should include the default IP address as one of its network addresses. Illustratively, the default IP address of the test device 37 is (169.254.1.0) and the subnet mask should be (255.255.0.0). The command receiver 31 may also receive an IP address of the test device 37 from a user using a user interface and assigns the received IP address as the address for the television apparatus to connect to the test device 37.

When the television apparatus 30 is turned off, battery power or AC power is still available to operate the input device 36, the command receiver 31, and optionally the Internet connection 33 if used in the service mode. The power to the display 32 and the broadcast receiver 34, however, are disconnected.

The test device 37 can be a standard laptop computer or a PC, acting as a server, running Chipper Check™ diagnostic software, available from Thomson Multimedia and sold under the RCA brand. The laptop (server) is connected to the electronic device (in this example a television) functioning as a client, with a standard Ethernet crossover cable, e.g., a cable plugged into an Ethernet port on the back of the television, which does not require removal of the back cover, and does not require any external interface box. The other end of the crossover cable is plugged into the laptop. The laptop is illustratively running a Windows^{™} operating system and the Chipper Check diagnostic software is an application program of the operating system. Since all Ethernet ports are the same, there is no need for adapter boards. This method of connection allows the diagnostics to be performed over an Internet connection.

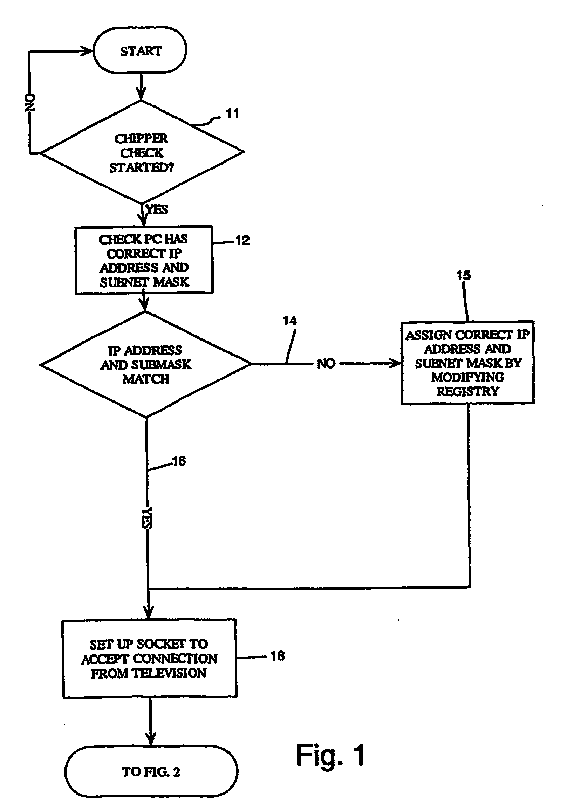

Referring now to **FIG.1****,** to initialize the TCP/IP connection, a diagnostic program, Chipper Check™ software in this example, is started **11** on a PC, which functions as the test device 37 in FIG. 3. The diagnostic software first checks **12** to see that the PC has assigned the default IP address.

If the PC does not include the default IP address and the default subnet at **13,** one of two conditions has occurred (assuming a network card is present in the PC):
1) The computer is not part of a network **14.** No IP address or subnet mask is assigned to the card. In this case, the Chipper Check assigns **15** the default IP address and subnet mask to the network card by modifying the Windows registry; or
2) The computer is part of a network **16.** The network card already has an IP address and subnet mask assigned to it (either statically or through a DHCP server) but the default IP address is not assigned. In this case, the Chipper Check adds the default IP address and the associated subnet mask by modifying the Windows registry, so that the PC can accept and receive messages using either address.

Once the IP address and subnet mask has been verified, the diagnostic software sets up a socket **18** to accept a connection from the television. The diagnostic software waits for a connection to be established.

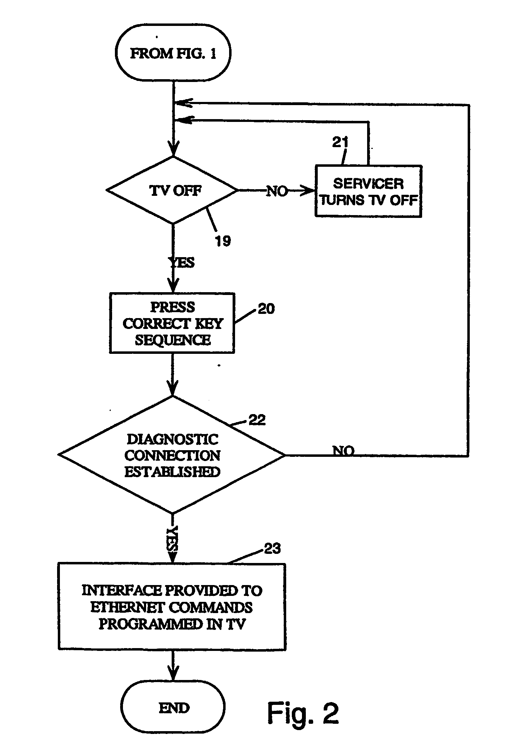

Referring to **FIG. 2****,** once the diagnostic software is in this wait state, the television can initialize the Ethernet connection by entering the service mode. The service mode is illustratively entered by a service person in one of two methods.

In the first method, the service person may place the television in service mode by turning off **21** the television and when the television is off **19** holding down a key sequence **20** from the front panel of the television for a predetermined time, for example, by holding down two keys in the front panel simultaneously for 10 seconds. When the television is placed in the service mode, the television initiate a connection with the PC using the default IP address at **22.** It is necessary for the service person to have a way to establish a diagnostic software connection when the television will not turn on. Even though a picture is not present, EEPROM values can be modified, devices can be pinged, and fault codes can be read.

In the second method, that is not part of the present invention, the service person turns on the television and invokes a service menu to be displayed on the television screen using keys provided on the front panel. The service menu includes an IP address entry and the service person may enter the IP address using keys on the front panel or on a remote control. After the IP address has been entered, the television is placed on service mode and thereafter initiates a connection with the PC using the entered IP address.

When the television enters service mode, it tries to communicate with the PC with the IP address described above. If a connection is established **22,** the diagnostic software provides **23** a user interface to send commands and receive responses from the television through an Ethernet interface such as the input device 36 in FIG. 3. These commands provide the basic Chipper Check functionality.

The television software can be upgraded in one embodiment by disconnecting power sources from the television and then holding down a combination of front panel keys while the television is reconnected to the power sources, causing the PC to act as an FTP server and the television to log into the PC, request files, and upgrade the software.

Referring back to FIG. 3, although the test device 37 is illustrated as connecting to the television apparatus 30 through a local Ethernet port included in the input device 36, the test device 37 can be connected to the Internet network 35 and the television apparatus 30 may connect to the test device 37 through the Internet connection 33.

While the invention has been described in sufficient detail that those skilled in this art can readily make and use it, various alternatives, modifications, and improvements should become readily apparent without departing from the scope of the invention as defined by the appended claims. For example, although TCP/IP is illustrated, other protocols such as OSI Reference Model can be used as well.

## Claims

1. An electronic apparatus (30) operating in a selected one of normal and service modes, the electronic apparatus comprising:
a first network interface (36) for connecting the apparatus to a first network;
means (31) for assigning a network address to the apparatus for use by the apparatus to initiate communication with a server connected to the first network via the first network interface by entering the apparatus into the service mode;
means for executing commands from the server (37) and reporting status to the server when the apparatus is in the service mode,
wherein the electronic apparatus is an electronic appliance having a microcontroller and chassis components and the electronic apparatus is placed in service mode through a user command when the electronic apparatus is turned off.

2. The electronic apparatus of claim 1 wherein the first network is an Ethernet network and the first network interface is an Ethernet network interface.

3. The electronic apparatus of claim 2 wherein the electronic apparatus establishes a connection-oriented connection with the server.

4. The electronic apparatus of claim 3 wherein the connection-oriented connection is a TCP connection.

5. The electronic apparatus of claim 4 wherein the electronic apparatus is a television apparatus.

6. The electronic apparatus of claim 5 further comprising a signal receiver for receiving television signals.

7. The electronic apparatus of claim 6 wherein the commands are selected from the group consisting of maintenance commands, control commands, diagnostic commands, software update commands, and alignment commands.

8. The electronic apparatus of claim 6 further comprising means for placing the television apparatus in a service mode.

9. The apparatus of claim 8 wherein the placing means places the apparatus in the service mode when the placing means receives a signal from a service person, indicating that the service person holds down a key sequence for a predetermined time.

10. The electronic apparatus of claim 6 further comprising means for assigning an IP address to the television apparatus for communication with the server.

11. The electronic apparatus of claim 10 wherein the assigning means automatically assigns a default IP address as an IP address of the server.

12. The electronic apparatus of claim 10 wherein the assigning means receives an IP address from a service person entering the IP address from a user interface mechanism.

13. The electronic apparatus of claim 12 wherein after the assigning means has received the IP address, the apparatus is placed in the service mode and the apparatus automatically initiates the connection with the server addressed by the IP address.

14. The apparatus of claim 6, where in the apparatus comprises software and the apparatus further comprises means for upgrading the software by holding down a combination of front panel keys while the apparatus, causing the server to act as an FTP server and the apparatus to log into the server, request files, and upgrade the software.

15. The electronic apparatus of claim 2 further comprising a second network interface for connecting to an Internet network.

16. The electronic apparatus of claim 1 wherein the first network is an Internet network.

17. The electronic apparatus of claim 16 wherein the first network interface comprises a cable modem.

18. A method of diagnosing an electronic apparatus having normal and service modes of operation, the method comprising the steps of:
providing a first network interface for connecting the apparatus to a first network;
placing the apparatus in the service mode through a user command, when the electronic apparatus is turned off.
automatically assigning a network address to the apparatus for communication with a server connected to the first network by entering the apparatus into the service mode;
initiating a connection request from the apparatus for connecting to the server through the first network interface; and
receiving and executing commands from the server to the electronic apparatus, and reporting status of the electronic apparatus to the server when the apparatus is in the service mode.

19. The method of claim 18 wherein the electronic apparatus is a television apparatus.

20. The method of claim 19 wherein the first network is an Ethernet network and the first network interface is an Ethernet network interface.

21. The method of claim 20 wherein the connection request is a TCP connection request.

22. The method of claim 21 wherein the commands are selected from the group consisting of maintenance commands, diagnostic commands, software update commands, and alignment commands.

23. The method of claim 19 wherein the placing step also comprises the step of holding down a key sequence for a predetermined time, and the initiating step uses a default network address for connecting to the server.

24. The method of claim 21, wherein the placing step comprises the step of entering an IP address of the server into a service menu, and the initiating step uses the IP address for connecting to the server.

25. The method of claim 18 wherein the first network is an Internet network.

26. The method of claim 25 wherein the first network interface comprises a cable modem.

## Patentansprüche

1. Elektronische Vorrichtung (30), die in einem aus einem Normal- und einem Service-Modus ausgewählten Modus betreibbar ist, wobei die elektronische Vorrichtung aufweist:
ein erstes Netzwerk-Interface (36) zur Verbindung der Vorrichtung mit einem ersten Netzwerk;
Mittel (31) zur Zuordnung einer Netzwerk-Adresse an die Vorrichtung zum Gebrauch durch die Vorrichtung, um eine Kommunikation mit einem Server zu auszulösen, der mit dem ersten Netzwerk über das erste Netzwerk-Interface verbunden ist, indem die Vorrichtung in den Service-Modus eingestellt wird;
Mittel zur Ausführung von Befehlen vom Server (37) und zum Melden des Zustands an den Server, wenn sich die Vorrichtung im Service-Modus befindet;
wobei die elektronische Vorrichtung eine elektronische Anwendung mit einem Microcontroller und Gehäusekomponenten ist und die elektronische Vorrichtung durch einen Benutzerbefehl in den Service-Modus versetzt wird, wenn die Elektronische Vorrichtung abgeschaltet ist.

2. Elektronische Vorrichtung nach Anspruch 1, wobei das erste Netzwerk ein Ethernet-Netzwerk ist und das erste Netzwerk-Interface ein Ethernet-Netzwerk-Interface ist.

3. Elektronische Vorrichtung nach Anspruch 2, wobei die elektronische Vorrichtung eine verbindungsorientierte Verbindung mit dem Server herstellt.

4. Elektronische Vorrichtung nach Anspruch 3, wobei die verbindungsorientierte Verbindung eine TCP-Verbindung ist.

5. Elektronische Vorrichtung nach Anspruch 4, wobei die elektronische Vorrichtung ein Fernsehapparat ist.

6. Elektronische Vorrichtung nach Anspruch 5, wobei diese außerdem einen Signalreceiver zum Empfang von Fernsehsignalen aufweist.

7. Elektronische Vorrichtung nach Anspruch 6, wobei die Befehle ausgewählt sind aus einer Gruppe, die aus Wartungsbefehlen, Bedienbefehlen, Diagnosebefehlen, Softwareupdatebefehlen und Anpassungsbefehlen besteht.

8. Elektronische Vorrichtung nach Anspruch 6, wobei diese außerdem ein Mittel aufweist, um den Fernsehapparat in einen Service-Modus zu versetzen.

9. Vorrichtung nach Anspruch 8, wobei das Versetzungsmittel die Vorrichtung in den Service-Modus versetzt, wenn das Versetzungsmittel ein Signal von einer Serviceperson erhält, das anzeigt, dass die Serviceperson eine Tastenkombination eine vorbestimmte Zeit gedrückt hält.

10. Elektronische Vorrichtung nach Anspruch 6, wobei die Vorrichtung außerdem Mittel zur Vergabe einer IP-Adresse an den Fernsehapparat für die Kommunikation mit dem Server aufweist

11. Elektronische Vorrichtung nach Anspruch 10, wobei die Vergabemittel außerdem automatisch eine Standard-IP-Adresse als eine IP-Adresse des Servers vergeben.

12. Elektronische Vorrichtung nach Anspruch 10, wobei die Vergabemittel außerdem eine IP-Adresse von einer Service-Person erhalten, die die IP-Adresse von einer Benutzerschnittstellen-Vorrichtung eingeben kann.

13. Elektronische Vorrichtung nach Anspruch 12, wobei die Vorrichtung in den Service-Modus versetzt wird, nachdem die Vergabemittel die IP-Adresse erhalten haben, und die Vorrichtung automatisch die Verbindung mit dem Server auslöst, der mit der IP-Adresse angesprochen ist.

14. Vorrichtung nach Anspruch 6, wobei die Vorrichtung Software aufweist und die Vorrichtung außerdem Mittel aufweist, um die Software upzugraden, indem eine Kombination von Tasten auf der Frontblende gedrückt gehalten wird, während die Vorrichtung den Server veranlasst, als ein FTP-Server zu wirken, und die Vorrichtung sich in den Server einloggt, Dateien anfordert und die Software upgraded.

15. Elektronische Vorrichtung nach Anspruch 2, wobei die Vorrichtung außerdem ein zweites Netzwerk-Interface zur Verbindung mit einem Internet-Netzwerk aufweist.

16. Elektronische Vorrichtung nach Anspruch 1, wobei das erste Netzwerk ein Internet-Netzwerk ist.

17. Elektronische Vorrichtung nach Anspruch 16, wobei das erste Netzwerk-Interface ein Kabel-Modem aufweist.

18. Verfahren zur Diagnose einer elektronischen Vorrichtung mit einem Normal- und einem Service-Betriebsmodus, wobei das Verfahren die folgenden Schritte aufweist:
Bereitstellen eines ersten Netzwerk-Interfaces zur Verbindung der Vorrichtung mit einem ersten Netzwerk;
Versetzen der Vorrichtung in den Service-Modus durch einen Benutzerbefehl, wenn die elektronische Vorrichtung abgeschaltet ist;
die automatische Vergabe einer Netzwerk-Adresse für die Vorrichtung zur Kommunikation mit einem Server, der verbunden ist mit dem ersten Netzwerk, indem die Vorrichtung in den Service-Modus eingestellt wird;
Auslösen einer Verbindungsanforderung von der Vorrichtung zur Verbindung mit dem Server über das erste Netzwerk-Interface; und
Empfangen und Ausführen von Befehlen vom Server an die elektronische Vorrichtung und Melden des Zustands der elektronischen Vorrichtung an den Server, wenn sich die Vorrichtung im Service-Modus befindet.

19. Verfahren nach Anspruch 18, wobei die elektronische Vorrichtung ein Fernsehapparat ist.

20. Verfahren nach Anspruch 19, wobei das erste Netzwerk ein Ethernet-Netzwerk ist und das erste Netzwerk-Interface ein Ethernet-Netzwerk-Interface ist.

21. Verfahren nach Anspruch 20, wobei die Verbindungsanforderung eine TCP-Verbindungsanforderung ist.

22. Verfahren nach Anspruch 21, wobei die Befehle ausgewählt sind aus einer Gruppe, die aus Wartungsbefehlen, Diagnosebefehlen, Softwareupdatebefehlen und Anpassungsbefehlen besteht.

23. Verfahren nach Anspruch 19, wobei der Schritt zum Versetzen auch den Schritt beinhaltet, eine Tastenkombination eine vorbestimmte Zeit gedrückt zu halten, und der Schritt zum Auslösen eine Standard-Netzwerk-Adresse zur Verbindung mit dem Server benutzt.

24. Verfahren nach Anspruch 21, wobei der Schritt zum Versetzen den Schritt des Eingebens einer IP-Adresse des Servers in ein Service-Menü beinhaltet, und der Schritt zum Auslösen die IP-Adresse zur Verbindung mit dem Server nutzt.

25. Verfahren nach Anspruch 18, wobei das erste Netzwerk ein Internet-Netzwerk ist.

26. Verfahren nach Anspruch 25, wobei das erste Netzwerk-Interface ein Kabel-Modem aufweist.

## Revendications

1. Appareil électronique (30) fonctionnant dans un mode sélectionné parmi un mode normal et de service, ledit appareil électronique comprenant :
une première interface réseau (36) pour raccorder l'appareil à un premier réseau ;
un moyen (31) pour affecter une adresse réseau à l'appareil pour une utilisation par l'appareil pour initier une communication avec un serveur raccordé au premier réseau par l'intermédiaire de la première interface réseau en faisant entrer l'appareil dans le mode de service ;
un moyen pour exécuter des commandes du serveur (37) et rendre compte de l'état au serveur quand l'appareil est dans le mode de service ;
dans lequel l'appareil électronique est un appareil électronique comportant des composants de microcontrôleur et de châssis, et l'appareil électronique est placé en mode de service par l'intermédiaire d'une commande de l'utilisateur quand l'appareil électronique est éteint.

2. Appareil électronique selon la revendication 1, dans lequel le premier réseau est un réseau Ethernet et la première interface réseau est une interface réseau Ethernet.

3. Appareil électronique selon la revendication 2, dans lequel l'appareil électronique établit une connexion orientée connexion avec le serveur.

4. Appareil électronique selon la revendication 3, dans lequel la connexion orientée connexion est une connexion TCP.

5. Appareil électronique selon la revendication 4, dans lequel l'appareil électronique est un appareil de télévision.

6. Appareil électronique selon la revendication 5, comprenant également un récepteur de signal pour recevoir des signaux de télévision.

7. Appareil électronique selon la revendication 6, dans lequel les commandes sont sélectionnées parmi le groupe composé de commandes de maintenance, commandes de contrôle, commandes de diagnostic, commandes de mise à jour de logiciel, et de commandes d'alignement.

8. Appareil électronique selon la revendication 6, comprenant également un moyen pour placer l'appareil de télévision dans un mode de service.

9. Appareil selon la revendication 8, dans lequel le moyen de placement place l'appareil dans le mode de service quand le moyen de placement reçoit un signal de la part d'une personne de service, indiquant que la personne de service maintient une séquence de touches enfoncée pour une durée prédéterminée.

10. Appareil électronique selon la revendication 6, comprenant également un moyen pour affecter une adresse IP à l'appareil de télévision pour la communication avec le serveur.

11. Appareil électronique selon la revendication 10, dans lequel le moyen d'affectation affecte automatiquement une adresse IP par défaut comme une adresse IP du serveur.

12. Appareil électronique selon la revendication 10, dans lequel le moyen d'affectation reçoit une adresse IP d'une personne de service entrant l'adresse IP à partir d'un mécanisme d'interface utilisateur.

13. Appareil électronique selon la revendication 12, dans lequel une fois que le moyen d'affectation a reçu l'adresse IP, l'appareil est placé dans le mode de service et l'appareil initie automatiquement la connexion avec le serveur adressé par l'adresse IP.

14. Appareil électronique selon la revendication 6, dans lequel l'appareil comprend un logiciel et l'appareil comprend également un moyen pour mettre à niveau le logiciel en maintenant enfoncée une combinaison de touches du panneau frontal pendant que l'appareil fait agir le serveur comme un serveur FTP et fait ouvrir à l'appareil une session dans le serveur, demander des fichiers, et mettre à jour le logiciel.

15. Appareil électronique selon la revendication 2, comprenant également une seconde interface réseau pour se connecter à un réseau internet.

16. Appareil électronique selon la revendication 1, dans lequel le premier réseau est un réseau internet.

17. Appareil électronique selon la revendication 16, dans lequel la première interface réseau comprend un modem câble.

18. Procédé de diagnostic d'un appareil électronique comprenant des modes de fonctionnement normal et de service, ledit procédé comprenant les étapes suivantes :
fourniture d'une première interface réseau pour connecter l'appareil à un premier réseau ;
placement de l'appareil dans le mode de service à travers une commande de l'utilisateur, quand l'appareil électronique est éteint ;
affectation automatique d'une adresse réseau à l'appareil pour la communication avec un serveur connecté au premier réseau en faisant entrer l'appareil dans le mode de service ;
initiation d'une demande de connexion à partir de l'appareil pour se connecter au serveur à travers la première interface réseau ; et
réception et exécution de commandes depuis le serveur à l'appareil électronique, et compte-rendu de l'état de l'appareil électronique au serveur quand l'appareil est dans le mode de service.

19. Procédé selon la revendication 18, dans lequel l'appareil électronique est un appareil de télévision.

20. Procédé selon la revendication 19, dans lequel le premier réseau est un réseau Ethernet, et la première interface réseau est une interface réseau Ethernet.

21. Procédé selon la revendication 20, dans lequel la demande de connexion est une demande de connexion TCP.

22. Procédé selon la revendication 21, dans lequel les commandes sont sélectionnées parmi le groupe composé de commandes de maintenance, commandes de diagnostic, commandes d'actualisation de logiciel et de commandes d'alignement.

23. Procédé selon la revendication 19, dans lequel l'étape de placement comprend également l'étape de maintien enfoncée d'une séquence de touches pendant une durée prédéterminée, et l'étape d'initiation utilise une adresse réseau par défaut pour la connexion au serveur.

24. Procédé selon la revendication 21, dans lequel l'étape de placement comprend l'étape d'entrée d'une adresse IP du serveur dans un menu de service, et l'étape d'initiation utilise l'adresse IP pour la connexion au serveur.

25. Procédé selon la revendication 18, dans lequel le premier réseau est un réseau internet.

26. Procédé selon la revendication 25, dans lequel la première interface réseau comprend un modem câble.
